(19) Europäisches Patentamt
European Patent Office
Office européen des brevets

(11) Numéro de publication: **0 039 267**
**B1**

(12) **FASCICULE DE BREVET EUROPEEN**

(45) Date de publication du fascicule du brevet: **25.05.83**

(51) Int. Cl.³: **B 01 J 23/24**, B 01 J 23/88

(21) Numéro de dépôt: **81400575.7**

(22) Date de dépôt: **10.04.81**

(54) **Procédé pour la préparation de catalyseurs à base d'oxyde de molybdène et/ou de tungstène et d'oxydes d'autres métaux.**

(30) Priorité: **25.04.80 FR 8009314**

(43) Date de publication de la demande: **04.11.81 Bulletin 81/44**

(45) Mention de la délivrance du brevet: **25.05.83 Bulletin 83/21**

(84) Etats contractants désignés: **BE CH DE FR GB IT LI NL SE**

(56) Documents cités:
**FR-A-2 252 326**
**FR-A-2 354 812**
**FR-A-2 435 456**

(73) Titulaire: **RHONE-POULENC CHIMIE DE BASE, 25, quai Paul Doumer, F-92408 Courbevoie (FR)**

(72) Inventeur: **Derrien, Jean-Yves, 9, rue Cécile Vallet, F-92340 Bourg-La-Reine (FR)**

(74) Mandataire: **Dutruc-Rosset, Marie-Claude et al, RHONE POULENC RECHERCHES Service Brevets Chimie et Polymères 25, Quai Paul Doumer, F-92408 Courbevoie Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 039 267 B1

# Procédé pour la préparation de catalyseurs à base d'oxydes de molybdène et/ou de tungstène et d'oxydes d'autres métaux

La présente invention a pour objet un perfectionnement à la préparation de catalyseurs. Elle concerne plus particulièrement la préparation de catalyseurs à base d'oxydes de molybdène, et/ou de tungstène.

De tels catalyseurs sont connus dans l'art antérieur. Ils sont utilisés, en particulier, pour la préparation d'aldéhydes $\alpha$-$\beta$ insaturés par oxydation d'oléfines en phase gazeuse.

C'est ainsi que le brevet facçais n° 1 514 167 décrit des catalyseurs pour la préparation d'aldéhydes insaturés par oxydation d'oléfines telles que le propylène et l'isopropylène par l'air ou l'oxygène de l'air répondant à la formule générale

$$Ni_aCo_bFe_cBi_dAs_eP_fMo_gO_h$$

avec a compris entre 0 et 20, b entre 0 et 20, (a+b entre 0,5 et 20), c entre 0,5 et 8, d entre 0,1 et 7, e entre 0 et 3, f inférieur à 0,1, g égal à environ 12, h compris entre 36 et 98.

Ces catalyseurs sont préparés en ajoutant une solution aqueuse de sels solubles dans l'eau convenables de nickel, cobalt, fer et bismuth, d'un composé d'arsenic convenable et d'un composé du phosphore convenable à une solution aqueuse d'un molybdate convenable tel que le molybdate d'ammonium. La bouillie résultante est alors chauffée, avec un support si on le désire, pour éliminer l'eau et sécher le gâteau solide qui se forme. Le gâteau solide est ensuite calciné à une température élevée dans l'air. Des sels solubles dans l'eau convenables, mentionnés dans le brevet précité, sont le nitrate de nickel, le nitrate de cobalt, le nitrate ferrique, et le nitrate de bismuth par exemple.

Le brevet français n° 1 604 942 se repporte à un procédé de préparation d'acroléine qui consiste à oxyder le propylène en phase gazeuse, avec un gaz contenant de l'oxygène et de la vapeur d'eau, en présence d'un catalyseur à base d'oxydes de molybdène, de bismuth, de fer et de cobalt dont la teneur en atome est la suivante: Mo 40,0 à 67,7%; Bi 1,9 à 21,7%; Fe 1,6 à 6,5% et Co 21,0 à 48,1%.

Le procédé de préparation de ces catalyseurs décrit dans ce brevet consiste à ajouter dans une solution aqueuse de molybdate d'ammonium vigoureusement agitée une solution aqueuse de nitrate de fer, cobalt et bismuth. Ensuite, on élimine l'eau et on calcine le produit résultant éventuellement sur un support.

Un autre document de l'art antérieur, la demande de brevet français n° 72.20810, publiée sous le numéro 2 147 933 fait état d'un procédé de préparation de composés à groupe carbonyle insaturés à partir d'oléfines. Selon ce procédé, on conduit l'oxydation catalytique en présence d'un oxyde catalytique dans lequel les rapports atomiques des éléments catalytiques constitutifs Co/Fe/Bi/W/Mo/Si/Tl/Z (Z = métaux alcalins et alcalino-terreux) sont 2,0 à 20,0/0,1 à 10,0/0,1 à 10,0/0,5 à 10,0/2,0 à 11,5/0,5 à 15,0/0,005 à 3,0/0 à 3,0 sous réserve que W+Mo soit égal à 12,0.

On peut préparer ces catalyseurs en mélangeant des solutions aqueuses de molybdate d'ammonium et de p-tungstate d'ammonium, en ajountant au mélange les solutions aqueuses de nitrate de cobalt, nitrate ferrique, nitrate de bismuth, nitrate de thallium, ainsi que la solution aqueuse d'un hydroxyde ou d'un nitrate d'un métal alcalin ou alcalino-terreux. On évapore ensuite l'eau et on calcine le produit obtenu éventuellement sur support.

On connait encore dans l'art antérieur, la demande de brevet d'invention n° 76.27531, publiée sous le numéro 2 364 061 qui décrit un catalyseur à base d'oxyde de cobalt, de molybdène, de bismuth et de fer de formule $Co_aMo_{12}Fe_bBi_cOx$ avec a compris entre 8 et 10, b entre 0,5 et 2, c entre 0,5 et 2 et x satisfaisant aux valences dans lequel la phase active contient une phase répondant à la formule $Bi_2Mo_2Fe_2O_{12}$. Ces catalyseurs permettent d'obtenir des rendements très sensiblement améliorés lors, par exemple, de l'oxydation d'oléfines en aldéhydes $\alpha$-$\beta$ insaturés.

On prépare ces catalyseurs en faisant réagir une solution d'heptamolybdate d'ammonium et une solution de nitrates de Co, Bi et Fe. On évapore ensuite l'eau et on sèche la pâte. Le solide obtenu est soumis après une éventuelle pré-calcination à environ 450°C à une première calcination à une température comprise entre 450°C et 500°C pendant au moins 5 heures puis, après refroidissement, à température ambiante à une deuxième calcination dans les mêmes conditions que la première.

On constate donc que dans l'art antérieur, il existe un grand nombre de documents décrivant la mise en oeuvre pour l'oxydation par l'air d'oléfines — et, en particulier, pour l'oxydation de propylène en acroléine — de catalyseurs à base principalement d'oxydes de cobalt, fer, bismuth et molybdène. Un certain nombre d'oxydes d'autres métaux ont été proposés comme adjuvants à la composition de base. On constate également que les procédés de préparation de ces catalyseurs font tous intervenir dans la première étape, la réaction entre l'heptamolybdate d'ammonium et les nitrates de fer, cobalt et bismuth.

Il se forme lors de cette réaction du nitrate d'ammonium qui se décomposera thermiquement à environ 220°C lors d'une calcination postérieure.

Il est clair que cette décomposition thermique du nitrate d'ammonium pose de sérieux problèmes pratiques. En effet, l'homme de l'art sait bien que le nitrate d'ammonium est un composé explosif et, à ce titre, est d'une manipulation à l'échelle industrielle dangereuse.

Dans certains procédés, on utilise également, à la place des nitrates, des chlorures des métaux entrant dans la composition du catalyseur sohaité. Il se forme alors du chlorure d'ammonium $NH_4Cl$ qui lors de la décomposition thermique va se sublimer aux environs de 340° C et se déposer sous forme de poudre blanche dans l'appareillage. L'encrassement résultant est bien évidemment néfaste lors des opérations de fabrication du catalyseur.

Il est à souligner que dans la pratique industrielle, il est extrêmement difficile, sinon impossible, de s'affranchir de la présence simultanée de sels d'ammonium et de nitrates ou de sels d'ammonium et de chlorures.

On constate donc que subsiste dans l'art antérieur le besoin d'un procédé permettant la préparation de catalyseurs à base notamment d'oxydes de molybdène et/ou de tungstène, faisant intervenir la réaction d'au moins un sel d'ammonium et d'au moins un chlorure et/ou nitrate de ces métaux dans lequel il n'y ait pas de risque, lors des opérations ultérieures de calcination, de décomposition thermique du nitrate d'ammonium et/ou de sublimation du chlorure d'ammonium.

La demanderesse a découvert un procédé atteignant cet objectif.

La présente invention a donc pour objet un procédé de préparation de catalyseurs comprotant une phase active répondant à la formule générale:

$$A_aMo_cW_dB_bO_x$$

dans laquelle:

- A représente au moins un métal choisi parmi le groupe comprenant le cobalt, le nickel, le manganèse, le plomb,
- B représente au moins un métal choisi parmi le groupe comprenant le fer, le bismuth, le chrome, le thallium,
- a représentant la somme des indices affectés à chacun des métaux A, est supérieur à 0 et inférieur ou égal à 12,
- c et d sont chacun supérieurs ou égaux à 0 et inférieurs ou égaux à 12, leur somme $c+d$ étant égale à 12;
- b représentant la somme des indices affectés à chacun des métaux B, est supérieur à 0 et inférieur ou égal à 1,5 $[(c+d)-a]$
- et x satisfait aux valences

procédé du type selon lequel dans une première étape on mélange en phase aqueuse des sels des métaux entrant dans la composition de la phase active, le molybdène et/ou le tungstène étant sous forme de sels d'ammonium et au moins l'un des métaux A et B étant sous forme d'un nitrate ou d'un chlorure, dans une deuxième étape on sèche la pâte obtenue et dans une troisième étape on effectue au moins une calcination du solide obtenu éventuellement déposé sur un support, procédé caractérisé en ce que dans la première étape, successivement, l'on ajoute à une première solution aqueuse contenant les sels d'ammonium de molybdène et de tungstène en quantités permettant d'atteindre les valeurs c et d, une deuxième solution aqueuse contenant les sels de A et de B en quantités permettant d'atteindre les valeurs a et b, en ce que l'on ajoute au mélange obtenu de l'ammoniaque jusqu'à obtention d'un pH supérieur au pH de la première solution aqueuse de départ puis en ce que l'on filtre la solution obtenue pour obtenir ladite pâte.

Le procédé selon l'invention est basé sur le fait que lorsque l'on mélange les première et deuxième solutions aqueuses, le pH qui était celui de la première solution aqueuse contenant les sels d'ammonium de molybdène et/ou de tungstène chute jusqu'à un pH très acide compris entre environ 1 et environ 2. Cette chute de pH, due à la présence de nitrate(s) et/ou de chlorure(s) dans la deuxième solution aqueuse, s'accompagne d'une précipitation de solide à base des métaux du groupe B ci-dessus. Lorsque l'on remonte le pH par addition d'ammoniaque et plus particulièrement lorsque l'on remonte à une valeur de pH supérieure à celle de la première solution aqueuse de départ, on assiste alors à la précipitation de solide à base des métaux du groupe A. En fin d'addition d'ammoniaque et après filtration, on est en présence d'une phase solide, ne contenant pas de nitrate d'ammonium et/ou chlorure d'ammonium, qui après séchage et calcination(s) donne le catalyseur recherché. La phase liquide est une solution aqueuse contenant principalement le nitrate d'ammonium et/ou le chlorure d'ammonium formés et qui contient également des races des métaux entrant dans la composition de la phase active recherchée.

D'après les constatation et l'interprétation de la Demanderesse, le solide qui précipite lorsque l'on mélange les première et deuxième solution aqueuse est principalement constitué de moybdates des métaux du groupe B; le solide qui précipite lors de l'addition d'ammoniaque est lui constitué principalement de molybdates des métaux du groupe A.

On peut citer plus particulièrement comme sel d'ammonium de molybdène l'heptamolybdate d'ammonium. Ce dernier peut être mis en oeuvre sous forme d'heptamolybdate d'ammonium cristallisé soit sous forme d'un mélange de dimolybdate d'ammonium et d'anhydrite molybdique.

Lorsque la première solution aqueuse contient uniquement de l'heptamolybdate d'ammonium son

pH est de 5,4. Pour obtenir la précipitation des métaux du groupe A, il faudra donc dépasser cette valeur par adjonction d'ammoniaque.

On peut citer plus particulièrement comme sel d'ammonium de tungstène, le para tungstate d'ammonium.

Lorsque la première solution aqueuse contient uniquement du paratungstate d'ammonium le pH à dépasser, donc le pH de la solution aqueuse, est de 5,8.

Lorsqu'on a un mélange des deux, c'est à dire de paratungstate d'ammonium et d'heptamolybdate d'ammonium, le pH peut osciller selon les proportions relatives entre 5,4 et 5,8.

La valeur du pH final à laquelle on arrêtera l'addition d'ammoniaque dépend de la quantité des métaux du groupe A à précipiter.

Il apparait clairement à l'homme de l'art qu'à partir de deux mêmes solutions aqueuses de départ, il est possible d'atteindre des formules catalytiques différentes selon que l'on arrête plus tôt ou plus tard l'addition d'ammoniaque. L'invention apporte donc un avantage supplémentaire qui est de pouvoir contrôler très précisément la composition finale du catalyseur.

Selon un mode de mise en oeuvre particulier de l'invention on utilise une première solution aqueuse contenant uniquement de l'heptamolybdate d'ammonium et une deuxième solution aqueuse contenant comme métal A, le cobalt et comme métaux B, le fer et le bismuth en quantités permettant d'atteindre la formule catalytique où a est compris entre 8 et 10, c est égal à 12, et b est compris entre 1 et 4. Dans ce cas, on ajoute au mélange obtenu de l'ammoniaque jusqu'à obtention d'un pH compris entre 6 et 9.

Encore plus particulièrement selon l'invention, on utilise les deux mêmes solutions aqueuses d'une part de molybdène et, d'autre part, de fer, bismuth, cobalt en quantités permettant d'atteindre la formule catlytique où a est égal à 10, c est égal à 12 et b est égal à 2.

Dans ce cas, on ajoute au mélange obtenu de l'ammoniaque jusqu'à obtention d'un pH égal à 6,5.

Selon une variante de l'invention après la fin de l'addition de l'ammoniaque et avant la filtration, on porte la suspension obtenue à une température comprise entre 20°C et 100°C et on maintient cette température entre 1 h et 48 h. Ce traitement thermique permet de parfaire la précipitation des métaux du groupe A et du molybdène et/ou du tungstène. Au cours de cette phase facultative du procédé, on peut assister à une évolution du pH qui peut décroitre légèrement.

Il apparait clairement que plus la température sera élevée, moins le temps de maintien de la suspension à cette température sera long.

On préfère, de préférence, maintenir pendant 4 heures une température de 60°C.

On ajoute l'ammoniaque en utilisant, de préférence, une solution aqueuse contenant entre 50 et 250 g d'ammoniac par litre de solution et en ajoutant cette solution à une vitesse comprise entre 20 et 200 g de $NH_3$/heure/litre de mélange.

Encore plus que préférentiellement, on préfère opérer avec une solution contenant 200 g d'ammoniac/litre et avec une vitesse de 60 g de $NH_3$/heure/litre de mélange.

Comme indiqué précédemment les catalyseurs obtenus selon le procédé de l'invention sont utiles, notamment pour l'obtention d'acroléine par oxydation par l'air du propylène.

D'autres avantages et caractéristiques de l'invention apparaitront plus clairement à la lecture des exemples qui vont suivre qui ne sauraient être considérés en aucune manière comme une limitation de l'invention.

## Exemple 1

### Préparation de $Co_9Mo_{12}Fe_1Bi_1O_x$

On prépare une première solution aqueuse d'heptamolybdate d'ammonium en dissolvant 167,6 g de $(NH_4)_6Mo_7O_{24}$, 4 $H_2O$ dans 760 $cm^3$ d'$H_2O$ à température ambinate; on prépare une deuxième solution aqueuse de nitrates en mélangeant à température ambiante les trois solutions suivantes:

- 38,4 g de $Bi(NO_3)_3$, 5 $H_2O$ dans 28,5 $cm^3$ d'$H_2O$ acidifiée par 4 $cm^3$ d'acide nitrique pur
- 32,1 g de $Fe(NO_3)_3$, 9 $H_2O$ dans 25 $cm^3$ d'$H_2O$
- 230,2 g de $Co(NO_3)_2$, 6 $H_2O$ dans 150 $cm^3$ d'$H_2O$

on maintient sous forte agitation la deuxième solution de nitrates à température ambiante et on additionne la solution de nitrates à la solution d'heptamolybdate en agitant fortement.

A la fin de l'addition de nitrates le pH est de 1,3. On observe la présence d'un précipité à base de bismuth et de fer.

On additionne ensuite une solution de $NH_4OH$ (d=0,926, 184 g de $NH_3$/l) à la vitesse de 5 $cm^3$/minute. Lorsque le pH atteint la valeur 6,9 c'est-à-dire lorsqu'on a versé 146 ml de $NH_4OH$ en 30 minutes on arrête l'addition. On observe l'apparition d'un précipité supplémentaire à base de cobalt. On porte ensuite la suspension résultante à une température égale à 60°C et on maintient cette

température pendant 4 heures. On filtre ensuite la suspension. On obtient d'une part un précipité et d'autre part un filtrat dont l'analyse révèle la présence de 156 g de $NH_4NO_3$, de 5,4 g de Co exprimé sous forme métallique et 2,6 g de Mo exprimé sous forme métallique. On ne décèle la présence ni de fer ni de bismuth dans le filtrat. Le précipité est lavé avec un litre d'$H_2O$ à température ambiante. Le gâteau est séché 20 heures à 120° C, on obtient 226 g de solide, on calcine ensuite à 400° C pendant 6 heures le produit séché, on observe une perte de poids de 19,6 g. Cette perte de poids correspond aux produits décomposables présent dans le produit séché dont une partie est du nitrate d'ammonium non éliminé dans le filtrat. Le produit obtenu a pour formule:

$Co_{9,1}Mo_{12}Fe_{1,03}Bi_{1,03}O_x$.

Le rendement de précipitation de 88,4% pour le cobalt, 97% pour le molybdène et 100% pour le fer et le bismuth. Ce solide peut être ensuite, selon les techniques connues dans l'art antérieur, broyé, entrobé sur support et calciné.

## Exemples 2—4

### Préparation de diverses formules catalytiques par variation du pH atteint par addition d'ammoniaque

On opère exactement comme dans l'exemple 1 à partir des mêmes solutions d'heptamolybdates et de métaux, mais en faisant varier la quantité de $NH_4OH$ ajoutée, donc le pH final. Les résultats sont donnés dans les tableaux I et II.

## Exemples 5—12

### Influence du traitement thermique après l'addition de $NH_4OH$ et avant filtration

On opère comme dans l'exemple 1 à partir des mêmes solutions d'heptamolybdate d'ammonium et de nitrates, mais en effectuant sur la suspension obtenue divers traitements thermiques de 4 heures à températures différentes.

Les tableaux III et IV donnent les résultats obtenus. A titre de comparaison ces résultats sont également indiqués dans le cas (exemple 9) où aucun traitement thermique n'est effectué.

On effectue une deuxième série d'essais en faisant varier le temps et en gardant constante la température (80° C). Les résultats sont donnés dans les tableaux V et VI.

## Exemple 13

### Préparation d'un catalyseur de formule $Co_{8,5}Mo_{12}Fe_1Bi_{0,5}O_x$

On prépare une première solution aqueuse d'heptamolybdate d'ammonium en dissolvant 167,6 g de $(NH_4)_6Mo_7O_{24}$, 4 $H_2O$ dans 760 cm³ d'$H_2O$ à température ambiante.

On prépare une deuxième solution aqueuse de nitrates en mélangeant à température ambiante les trois solutions suivantes:

— 230,2 g de $Co(NO_3)_2$, 6 $H_2O$ dans 100 cm³ d'$H_2O$
— 16,05 g de $Fe(NO_3)_2$, 9 $H_2O$ dans 12,5 cm³ d'$_2O$
— 38,4 g de $Bi(NO_3)_3$, 5 $H_2O$ dans 28,5 cm³ d'$H_2O$

acidifiée par 4 cm³ d'acide nitrique pur.

On mélange ces deux solutions comme dans l'exemple 1. Le pH décroit jusqu'à 2,2. On ajoute alors 125 cm³ de $NH_4OH$ (d = 0,926 114 g/l en $NH_3$) à la vitesse de 5 cm³/minute. On arrête l'addition lorsque le pH atteint la valeur 7.

On opère ensuite comme dans l'exemple 1.

Le filtrat contient: 149 g de $NH_4NO_3$; 7,9 g de cobalt exprimé sous forme métallique; 2,4 g de molybdène sous forme métallique, les teneurs en fer et en bismuth sont inférieures à 0,01 g.

Le poids du solide après séchage à 120° C est de 218 g.

La perte de poids après calcination à 400° C est de 15,3 g.

Le produit obtenu a pour formule:

$Co_{8,5}Mo_{12}Fe_{1,02}Bi_{0,50}O_x$

Le rendement de précipitation est de 83% pour le cobalt, 97,3% pour le molybdène et supérieur à 99,9% pour le fer et le bismuth.

Exemple 14

Préparation d'un catalyseur de formule $Co_{9,4}Mo_{12}Fe_{0,5}Bi_{0,5}$

On opère comme dans l'exemple 1 à partir des solutions suivantes:

- 167,6 g de $(NH_4)_6Mo_7O_{24}$ 4 $H_2O$ dans 760 $cm^3$ d'$H_2O$
- 230,2 g de $Co(NO_3)_2$, 6 $H_2O$ dans 100 $cm^3$ d'$H_2O$
- 16,05 g de $Fe(NO_3)_2$, 9 $H_2O$ dans 12,5 $cm^3$ d'$H_2O$
- 19,2 g de $Bi(NO_3)_3$, 5 $H_2O$ dans 14,5 $cm^3$ d'$H_2O$.

Lorsqu'on mélange les deux solutions, le pH chute à 2,85.

On rajoute 120 $cm^3$ de $NH_4OH$ (d = 0,926 184 g/l en $NH_3$) à 5 $cm^3$/mn jusqu'à obtention d'un pH de 6,6.

On opère ensuite comme dans l'exemple 1.

Le filtrat contient 118 g de $NH_4NO_3$; 4,2 g de cobalt; 3,41 g de molybdène, les teneurs en fer et en bismuth étant inférieures à 0,01 g.

Le poids du solide après déchage à 120° C est de 232 g.

La perte de poids après calcination à 400° C est de 37 g.

Le produit obtenu a pour formule:

$$Co_{9,4}Mo_{12}Fe_{0,51}Bi_{0,51}$$

Le rendement de précipitation est de 91% pour le cobalt, 96,5% pour le molybdène et supérieur à 99,9% pour le fer et le bismuth.

Exemple 15

Préparation d'un catalyseur de formule $Co_{9,8}Mo_{12}Fe_{1,2}Bi_{1,2}O_x$

On opère comme dans l'exemple 1 à partir des solutions suivantes: 167,6 g de $(NH_4)_6Mo_7O_{24}$, 4 $H_2O$ dans 760 $cm^3$ d'$H_2O$ — 184,2 de $Co(NO_3)_2$, 6 $H_2O$ dans 100 $cm^3$ d'$H_2O$ — 32,1 g de $Fe(NO_3)_2$, 9 $H_2O$ dans 25 $cm^3$ d'$H_2O$ — 38,4 g de $Bi(NO_3)_3$, 5 $H_2O$ dans 28,5 $cm^3$ d'$_2O$ acidifiée par 4 ml d'acide nitrique pur.

Lorsqu'on mélange les deux solutions aqueuses le pH chute à 1,5.

On rajoute 200 ml de $NH_4OH$ (d = 0,926 184 g/l en $NH_3$) à 5 $cm^3$/mn jusqu'à obtention d'un pH de 8.

On opère ensuite comme dans l'exemple 1.

Le filtrat contient 134 g de $NH_4NO_3$, moins de 0,02 g de cobalt, 16,8 g de molybdène et moins de 0,02 g de bismuth et de fer.

Le poids du solide après séchage à 120° C est de 215 g.

La perte de poids après calcination à 450° C est de 32,2 g.

Le produit obtenu a pour formule:

$$Co_{9,8}Mo_{12}Fe_{1,2}Bi_{1,2}O_x$$

Le redement de précipitation est de 99,9% pour le cobalt, 80,5 pour le molybdène et supérieur à 99,9% pour le fer et le bismuth.

Exemple 16

Préparation de $Co_5Ni_5Mo_{12}Fe_1Bi_1O_x$

On prépare une première solution aqueuse d'heptamolybdate d'ammonium en dissolvant 83,8 g de $(NH_4)_6Mo_7O_{24}$, 4 $H_2O$ dans 380 ml d'$H_2O$ à température ambiante; on prépare une deuxième solution aqueuse de nitrates en mélangeant les trois solutions suivantes:

- 19,2 g de $Bi(NO_3)_3$, 5 $H_2O$ dans 14 $cm^3$ d'$H_2O$ acidifiés par 2 $cm^3$ d'acide nitrique pur
- 16,05 g de $Fe(NO_3)_3$, 9 $H_2O$ dans 12,5 $cm^3$ d'$H_2O$
- 57,5 g de $Ni(NO_3)_2$, 6 $H_2O$ et 57,5 g de $Co(NO_3)_2$, 6 $H_2O$ dans 100 ml d'$H_2O$.

On maintient sous forte agitation la deuxième solution de nitrates à température ambiante et on additionne la solution de nitrates à la solution d'heptamolybdate en agitant fortement.

A la fin de l'addition des nitrates, le pH est de 1,75. On observe la présence d'un précipité à base de bismuth et de fer.

On additionne 75 ml de $NH_4OH$ de densité 0,920 en 20 minutes. Le pH est égal alors à 7. On observe l'apparition supplémentaire d'un précipité à base de cobalt et de nickel. On porte la suspension résultante à une température de 70° C pendant 3 h. On filtre ensuite la suspension. On obtient d'une part un précipité et d'autre part un filtrat dont l'analyse révèle la présence de 70 g de $NH_4NO_3$, 0,4 g de Co exprimé sous forme métallique, 0,6 g de Ni et 3,15 g de Mo.

On ne décele la présence ni de fer ni de bismuth dans le filtrat. On lave le précipité avec 500 $cm^3$ d'eau à température ambiante. Le gâteau est séché 20 h à 120° C.

On obtient 122 g de solide qu'on calcine ensuite à 400° C pendant 6 h. On observe une perte de poids de 24 g. Cette perte de poids correspond aux produits décomposables présents dans le produit séché.

Le produit obtenue a pour formule:

$$Co_{5,2}Ni_{5,1}Mo_{12}Fe_{1,07}Bi_{1,07}O_x$$

Les rendements de précipitation sont de 96,3% pour le cobalt, 94,8% pour le nickel, 93% le molybdène et 100% pour le fer et le bismuth.

## Exemple 17

### Préparation de $Co_5Mn_5Mo_{12}Fe_1Bi_1O_x$

On opère comme dans l'exemple 16 mais en utilisant à la place de 57,5 g de $Ni(NO_3)_2$, 6 $H_2O$ 49,6 g de $Mn(NO_3)_2$, 4 $H_2O$.

A la fin de l'addition des nitrates, le pH est de 1,3.

L'analyse du filtrat est la suivante: 78 g de $NH_4NO_3$, 0,37 g de Co, 0,12 g de Mn et 3,15 g de Mo exprimés sous forme métallique.

On obtient 115 g de solide. Après calcination à 400° C pendant 6 h, on observe une perte de poids de 11 g.

Le produit obtenu a pour formule:

$$Co_{5,2}Mn_{5,3}Mo_{12}Fe_{1,07}Bi_{1,07}O_x$$

Les rendements de précipitation sont de 96,8% pour le Co, 98,8% pour le Mn, 93,1% pour le Mo et 100% pour le Fe et le Bi.

## Exemple 18

### Précipitation de $Co_{10}Mo_{12}Fe_1Bi_1Cr_{0,5}O_x$

En opérant comme dans l'exemple 16 mais avec 7,9 g de $Cr(NO_3)_3$, 9 $H_2O$ dans 15 ml d'$H_2O$ et 115 g de $Co(NO_3)_2$, 6 $H_2O$ dans 50 ml d'$H_2O$, sans mettre en oeuvre de nickel.

A la fin de l'addition des nitrates, le pH est de 1,15.

On ajoute 75 ml de $NH_4OH$ ($d=0,920$) en 50 minutes.

Le pH est égal alors à 7.

L'analyse du filtrat est la suivante: 80 g de $NH_4NO_3$, 1,5 g de Co, 1,15 g de Mo, 0,012 g de Cr exprimés sous forme métallique. On ne décèle la présence ni de fer, ni de bismuth.

On obtient 116 g de solide. Après calcination pendant 6 h à 400° C on observe une perte de poids de 10 g.

Le produit obtenu a pour formule:

$$Co_{9,6}Mo_{12}Fe_1Bi_1Cr_{0,5}$$

Les rendements de précipitation sont de 93,5% pour le Co, 97,5% pour le Mo, 98,8% pour le chrome et 100% pour le Fe et le Bi.

## Exemple 19

### Préparation de $Co_{10}Mo_{12}Fe_1Bi_1Tl_{0,2}O_x$

On opère comme dans l'exemple 18 mais en utilisant 2,1 g de $TlNO_3$ dans 50 $cm^3$ d'$H_2O$ avec 1 $cm^3$ d'$HNO_3$ au lieu de 7,9 g de $Cr(NO_3)_3$ 9 $H_2O$ dans 15 ml d'$H_2O$.

A la fin de l'addition des nitrates, le pH est de 1,7.

On ajoute en 50 mn 75 ml de $NH_4OH$ (d = 0,920) pour obtenir un pH de 7.

L'analyse du filtrat est la suivante: 77 g de $NH_4NO_3$, 1,67 g de Co, 1 g de Mo, 0,005 g de Tl exprimés sous forme métallique. On ne décèle ni la présence de fer, ni celle de bismuth.

On obtient 119 g de solide. Après calcination pendant 6 h à 400° C, on observe une perte de poids de 12 g.

Le produit obtenu a pour formule:

$$Co_{9,5}Mo_{12}Fe_{1,02}Bi_{1,02}Tl_{0,2}O_x$$

Les rendements de précipitation sont de 92,8% pour le Co, 97,8% pour le Mo, 99,6% le Tl et 100% pour le Fe et le Bi.

Tableau I

| Ex. | Quantité de $NH_4OH$ (d = 0,926) ajoutée (ml) | Valeur du pH | Valeur catalytique obtenue |
|---|---|---|---|
| 2 | 124 | 6,4 | $Co_{8,5}Mo_{12}Fe_1Bi_1$ |
| 3 | 163 | 7 | $Co_{9,6}Mo_{12}Fe_1Bi_1$ |
| 4 | 183 | 7,1 | $Co_{9,9}Mo_{12}Fe_1Bi_1$ |

Tableau II

| Ex. | Composition du filtrat (g) | | | | | Poids du solide après séchage à 120° C (g) | Perte de poids après calcination à 400° C (g) | Rendement de précipitation (%) | | | |
|---|---|---|---|---|---|---|---|---|---|---|---|
| | $NH_4NO_3$ | Co | Mo | Bi | Fe | | | Co | Mo | Bi | Fe |
| 2 | 164 | 8,4 | 2,6 | <0,01 | <0,01 | 215 | 11,4 | 82 | 97,2 | >99,9 | >99,9 |
| 3 | 158 | 3,6 | 3,6 | <0,01 | <0,01 | 227 | 17,7 | 92,3 | 96 | >99,9 | >99,9 |
| 4 | 153 | 2,4 | 3,6 | <0,01 | <0,01 | 233 | 22,6 | 95 | 96 | >99,9 | >99,9 |

Tableau III

| Ex. | T. (° C) | Formule catalytique obtenue | Composition du filtrat (g) | | | | |
|---|---|---|---|---|---|---|---|
| | | | $NH_4NO_3$ | Co | Mo | Bi | Fe |
| 5 | 50 | $Co_{9,4}Mo_{12}Bi_{1,04}Fe_{1,04}$ | 155 | 4,6 | 3,6 | <0,01 | <0,01 |
| 6 | 60 | $Co_{9,36}Mo_{12}Bi_{1,02}Fe_{1,02}$ | 162 | 4 | 2,3 | <0,01 | <0,01 |
| 7 | 70 | $Co_{9,56}Mo_{12}Bi_{1,04}Fe_{1,04}$ | 159 | 3,8 | 3,6 | <0,01 | <0,01 |
| 8 | 80 | $Co_{9,51}Mo_{12}Bi_{1,04}Fe_{1,04}$ | 159 | 3,7 | 3,2 | <0,01 | <0,01 |
| 9 | – | $Co_{9,55}Mo_{12}Bi_{1,07}Fe_{1,07}$ | 160 | 5,1 | 6,2 | <0,01 | <0,01 |

Tableau IV

| Ex. | Poids du solide après séchage à 120° C (g) | Perte de poids après calcination à 400° C (g) | Rendement de précipitation (%) Co | Mo | Bi | Fe |
|---|---|---|---|---|---|---|
| 5 | 227 | 21 | 90,1 | 96 | >99,9 | >99,9 |
| 6 | 221 | 14 | 91,4 | 91,4 | >99,9 | <99,9 |
| 7 | 226 | 17 | 91,9 | 96 | >99,9 | >99,9 |
| 8 | 228 | 16,5 | 92 | 96,5 | >99,9 | >99,9 |
| 9 | 216 | 15,8 | 89 | 93,2 | >99,9 | >99,9 |

Tableau V

| Ex. | Durée du traitement thermique (h) | Formule catalytique obtenue | Composition du filtrat (g) $NH_4NO_3$ | Co | Mo | Bi | Fe |
|---|---|---|---|---|---|---|---|
| 10 | 1,30 | $Co_{9,31}Mo_{12}Bi_{1,04}Fe_{1,04}$ | 163 | 4,8 | 3,4 | <0,01 | <0,01 |
| 11 | 2 | $Co_{9,56}Mo_{12}Bi_{1,04}Fe_{1,04}$ | 162 | 4,3 | 3,3 | <0,01 | <0,01 |
| 12 | 4 | $Co_{9,51}Mo_{12}Bi_{1,04}Fe_{1,04}$ | 159 | 3,7 | 3,2 | <0,01 | <0,01 |

Tableau VI

| Ex. | Poids du solide après séchage à 120° C (g) | Perte de poids après calcination à 400° C (g) | Rendement de précipitation (%) Co | Mo | Bi | Fe |
|---|---|---|---|---|---|---|
| 10 | 219 | 13,3 | 89,7 | 96,3 | >99,9 | >99,9 |
| 11 | 224 | 14 | 90,8 | 96,4 | >99,9 | >99,9 |
| 12 | 228 | 16,5 | 92 | 96,5 | >99,9 | >99,9 |

**Revendications**

1. Procédé de préparation de catalyseurs comportant une phase active répondant à la formule générale:

$$A_aMo_cW_dB_bO_x$$

dans laquelle:

— A représente au moins un métal choisi parmi le groupe comprenant le cobalt, le nickel, le manganèse, le plomb,

— B représente au moins un métal choisi parmi le groupe comprenant le fer, le bismuth, le chrome, le thallium,
— a représentant la somme des indices affectés à chacun des métaux A, est supérieur à 0 et inférieur ou égal à 12,
— c et d sont chacun supérieurs ou égaux à 0 et inférieurs ou égaux à 12, leur somme c + d étant égale à 12;
— b représentant la somme des indices affectés à chacun des métaux B, est supérieur à 0 et inférieur ou égal à $1{,}5[(c+d)-a]$
— et x satisfait aux valences

procédé du type selon lequel, dans une première étape, on mélange en phase aqueuse des sels des métaux entrant dans la composition de la phase active, le molybdène et/ou le tungstène étant sous forme de sels d'ammonium et au moins l'un des métaux A et B étant sous forme d'un nitrate ou d'un chlorure, dans une deuxième étape, on sèche la pâte obtenue et dans une troisième étape, on effectue au moins une calcination du solide obtenu éventuellement déposé sur un support, procédé caractérisé en ce que dans la première étape, successivement, l'on ajoute à une première solution aqueuse contenant les sels d'ammonium de molybdène et de tungstène en quantités permettant d'atteindre les valeurs c et d, une deuxième solution aqueuse contenant les sels de A et de B en quantités permettant d'atteindre les valeurs a et b, en ce que l'on ajoute au mélange obtenu de l'ammoniaque jusqu'à obtention d'un pH supérieur au pH de la première solution aqueuse de départ puis en ce que l'on filtre la solution obtenue pour obtenir ladite pâte.

2. Procédé selon la revendication 1 caractérisé en ce que la première solution aqueuse contient uniquement de l'heptamolybdate d'ammonium.

3. Procédé selon la revendication 1 caractérisé en ce que la première solution aqueuse contient uniquement du paratungstate d'ammonium.

4. Procédé selon la revendication 1 caractérisé en ce que la première solution aqueuse contient un mélange d'heptamolybdate d'ammonium et de paratungstate d'ammonium.

5. Procédé selon les revendications 1 et 2 caractérisé en ce que l'on ajoute de l'ammoniaque jusqu'à obtention d'un pH supérieur à 5,4.

6. Procédé selon les revendications 1 et 3 caractérisé en ce que l'on ajoute de l'ammoniaque jusqu'à obtention d'un pH supérieur à 5,8.

7. Procédé selon les revendications 1 et 4 caractérisé en ce que l'on ajoute de l'ammoniaque jusqu'à obtention d'un pH supérieur à 5,4.

8. Procédé selon la revendication 1 caractérisé en ce que la première solution aqueuse contient de l'heptamolybdate d'ammonium, la deuxième solution aqueuse contient comme métal A le cobalt et comme métaux B, le fer et le bismuth en quantités permettant d'atteindre une valeur de a comprise entre 8 et 10, une valeur de c égale à 12 et une valeur de b comprise entre 1 et 4, et en ce que l'on ajoute de l'ammoniaque jusqu'à obtention d'un pH compris entre 6 et 9.

9. Procédé selon la revendication 8 caractérisé en ce que a est égal à 10, et b est égal à 2 et en ce que l'on ajoute de l'ammoniaque jusqu'à obtention d'un pH égal à 6,5.

10. Procédé selon la revendication 1 caractérisé en ce que après la fin de l'addition de l'ammoniaque et avant la filtration, on porte la suspension obtenue à une température comprise entre 20° C et 100° C et en ce que l'on maintient cette température entre 1 h et 48 h.

11. Procédé selon la revendication 10 caractérisé en ce que l'on porte la suspension à 60° C et en ce que l'on maintient cette température pendant 4 h.

12. Procédé selon l'une quelconque des revendications précédentes caractérisé en ce que l'on ajoute de l'ammoniaque en utilisant une solution aqueuse contenant entre 50 et 250 g d'ammoniac par litre de solution et en ajoutant cette solution à une vitesse comprise entre 20 et 200 g de $NH_3$/heure/litre de mélange.

13. Procédé selon la revendication 2 caractérisé en ce que la solution aqueuse contient 200 g d'ammoniac/litre et en ce que la vitesse est de 60 g de $NH_3$/heure/litre de mélange.

**Patentansprüche**

1. Verfahren zur Herstellung von Katalysatoren, enthaltend eine aktive Phase der allgemeinen Formel

$$A_aMo_cW_dB_bO_x$$

in der,

— A wenigstens ein Metall der Gruppe von Kobalt, Nickel, Mangan oder Blei bedeutet,
— B wenigstens ein Metall der Gruppe von Eisen, Wismut, Chrom oder Thallium bedeutet,
— a die Summe der Indices der Metalle A bedeutet und größer 0 und kleiner oder gleich 12 ist,

— c und d jeweils gleich oder größer 0 und kleiner oder gleich 12 sind und die Summe von c + d 12 ist,
— b die Summe der Indices der jeweiligen Metalle B bedeutet und größer als 0 und kleiner oder gleich 1,5[(c + d) − a] ist,
— und x den Valenzen genügt,

wobei man in einer ersten Stufe in wäßriger Phase Salze der Metalle gemäß der Zusammensetzung der aktiven Phase vermischt, das Molybdän und/oder das Wolfram in Form der Ammoniumsalze vorliegen und wenigstens eines der Metalle A und B in Form eines Nitrats oder Chlorids vorliegt, in einer zweiten Stufe die erhaltene Paste trocknet und in einer dritten Stufe wenigstens eine Calcinierung des erhaltenen, gegebenenfalls auf einem Träger niedergeschlagenen Feststoffes durchführt, dadurch gekennzeichnet, daß man in der ersten Stufe nacheinander einer ersten wäßrigen Lösung, die die Ammoniumsalze von Molybdän und Wolfram in zur Erreichung der Werte c und d ausreichenden Mengen enthält, eine zweite wäßrige Lösung hinzufügt, die die Salze von A und B in zur Erreichung der Werte a und b ausreichenden Mengen enthält, daß man dem erhaltenen Gemisch Ammoniak bis zur Erreichung eines pH-Werts über dem pH der ersten Ausgangslösung zugibt und daß man dann die erhaltene Lösung abfiltriert, um die genannte Paste zu erhalten.

2. Verfahren nach Anspruch 1, dadurch gekennzeichnet, daß die erste wäßrige Lösung nur Ammoniumheptamolybdat enthält.

3. Verfahren nach Anspruch 1, dadurch gekennzeichnet, daß die erste wäßrige Lösung nur Ammoniumparawolframat enthält.

4. Verfahren nach Anspruch 1, dadurch gekennzeichnet, daß die erste wäßrige Lösung ein Gemisch von Ammoniumheptamolybdat und Ammoniumparawolframat enthält.

5. Verfahren nach den Ansprüchen 1 und 2, dadurch gekennzeichnet, daß man Ammoniak bis zum Erreichen eines pH-Werts über 5,4 zugibt.

6. Verfahren nach den Ansprüchen 1 und 3, dadurch gekennzeichnet, daß man Ammoniak bis zum Erreichen eines pH-Werts über 5,8 zugibt.

7. Verfahren nach den Ansprüchen 1 und 4, dadurch gekennzeichnet, daß man Ammoniak bis zur Erreichung eines pH-Werts über 5,4 zugibt.

8. Verfahren nach Anspruch 1, dadurch gekennzeichnet, daß die erste wäßrige Lösung Ammoniumheptamolybdat enthält, daß die zweite wäßrige Lösung als Metall A Kobalt und als Metall B Eisen und Wismut in Mengen enthält, mit denen ein Wert a von 8 bis 10, ein Wert c von 12 und ein Wert b von 1 bis 4 erhalten werden kann und daß man Ammoniak bis zu einem pH von 6 bis 9 zugibt.

9. Verfahren nach Anspruch 8, dadurch gekennzeichnet, daß a gleich 10 und b gleich 2 ist und daß man das Ammoniak bis zu einem pH von 6,5 zugibt.

10. Verfahren nach Anspruch 1, dadurch gekennzeichnet, daß nach Beendigung der Zugabe des Ammoniaks und vor der Filtrierung die erhaltene Suspension auf eine Temperatur zwischen 20 und 100° C gebracht wird und daß man diese Temperatur 1 bis 48 Stunden aufrecht erhält.

11. Verfahren nach Anspruch 10, dadurch gekennzeichnet, daß man die Suspension auf 60° C bringt und diese Temperatur 4 h lang hält.

12. Verfahren nach irgendeinem der vorangehenden Ansprüche, dadurch gekennzeichnet, daß man das Ammoniak unter Verwendung einer wäßrigen Lösung zugibt, die 50 bis 250 g Ammoniak pro Liter Lösung enthält und daß man diese Lösung mit einer Geschwindigkeit von 20 bis 200 g $NH_3$/Stunde/Liter des Gemisches zugibt.

13. Verfahren nach Anspruch 12, dadurch gekennzeichnet, daß die wäßrige Lösung 200 g Ammoniak pro Liter enthält und daß die Geschwindigkeit 60 g $NH_3$/Stunde/Liter des Gemisches enthält.

**Claims**

1. A process for preparing catalysts comprising an active phase corresponding to the following general formula:

$$A_aMo_cW_dB_bO_x$$

in which:

— A represents at least one metal selected from the group comprising cobalt, nickel, manganese and lead;
— B represents at least one metal selected form the group comprising iron, bismuth, chromium and thallium;
— a, representing the sum of the indices associated with each of the metals A, ist greater than 0 and less than or equal to 12;
— c and d are each greater than or equal to 0 and less than or equal to 12, the sum c + d thereof being equal to 12;

— b, representing the sum of the indices associated with each of the metals B, is greater than 0 and less than or equal to 1.5 [(c+d)−a]; and
— x satisfies the valencies,

being a process of the type wherein, in a first step, salts of the metals involved in the composition of the active phase are mixed in aqueous phase, molybdenum and/or tungsten being in the form of ammonium salts and at least one of the metals A and B being in the form of a nitrate or a chloride, in a second step, the paste produced is dried and, in a third step, at least one operation is effected for calcination of the solid produced, which is possibly deposited on a carrier, characterised in that, in the first step, in succession, there is added to a first aqueous solution containing the ammonium salts of molybdenum and tungsten in amounts permitting the values c and d to be attained, a second aqueous solution containing the salts of A and B in amounts permitting the values a and b to be attained, that ammonia is added to the resulting mixture until the pH-value produced is higher than the pH-value of the first initial aqueous solution, and that the solution produced is filtered to produce said paste.

2. A process according to claim 1 characterised in that the first aqueous solution contains only ammonium heptamolybdate.

3. A process according to claim 1 characterised in that the first aqueous solution contains only ammonium paratungstate.

4. A process according to claim 1 characterised in that the first aqueous solution contains a mixture of ammonium heptamolybdate and ammonium paratungstate.

5. A process according to claim 1 and 2 characterised in that ammonia is added until the pH-value is higher than 5.4.

6. A process according to claims 1 and 3 characterised in that ammonia is added until the pH-value is higher than 5.8.

7. A process according to claims 1 and 4 characterised in that ammonia is added until the pH-value ist higher than 5.4.

8. A process according to claim 1 characterised in that the first aqueous solution contains ammonium heptamolybdate, the second aqueous solution contains cobalt as metal A and iron and bismuth as metals B, in amounts such as to make it possible to reach a value of a of from 8 to 10, a value of c of 12 and a value of b of from 1 to 4, and that ammonia is added until the pH-value obtained is from 6 to 9.

9. A process according to claim 8 characterised in that a is 10, and b is 2, and that ammonia is added until the pH-value obtained is 6.5.

10. A process according to claim 1 characterised in that, after the end of the operation of adding ammonia and before the filtration operation, the suspension produced is raised to a temperature of from 20° C to 100° C, and that said temperature is maintained for from 1 hour to 48 hours.

11. A process according to claim 10 characterised in that the suspension is raised to a temperature of 60° C and that said temperature is maintained for 4 hours.

12. A process according to any one of the preceding claims characterised in that ammonia is added using an aqueous solution containing from 50 to 250 g ammonia per litre of solution and by adding said solution at a speed of from 20 to 200 g of $NH_3$/hour/litre of mixture.

13. A process according to claim 2 characterised in that the aqueous solution contains 200 g of ammonia/litre and that the speed is 60 g of $NH_3$/hour/litre of mixture.